# FASCICULE DE BREVET EUROPEEN

(11) **EP 0 807 394 B1**
(45) Date de publication et mention de la délivrance du brevet: **22.12.1999**
(21) Numéro de dépôt: 97400983.9
(22) Date de dépôt: 30.04.1997
(51) Int. Cl.: A47J 27/21

(54) **Bouilloire électrique à plaque métallique de chauffe**
Elektrischer Kessel mit heizender metallischer Platte
Electrical kettle with heating metallic plate

(30) Priorité: 14.05.1996 FR 9605987
(43) Date de publication de la demande: 19.11.1997
(73) Titulaire: SEB S.A., 69130 Ecully (FR)
(72) Inventeur: Deliens, Patrick, 39700 Dampierre (FR)
(74) Mandataire: Keib, Gérard

(56) Documents cités:
- EP-A- 0 285 839
- EP-A- 0 574 310
- WO-A-96/18331
- FR-A- 2 708 407
- GB-A- 2 066 052
- GB-A- 2 291 324

## Description

La présente invention concerne une bouilloire électrique à plaque métallique de chauffe.

Il est bien connu d'équiper les réservoirs de liquide à chauffer d'un moyen de chauffe incluant une résistance électrique associé à une plaque métallique de chauffe qui est montée au fond du réservoir et vient en contact direct, par sa face supérieure, avec le liquide à chauffer.

Dans les bouilloires classiques, cette plaque de chauffe est surmoulée ou sertie directement dans les parois du réservoir, à proximité du fond de celui-ci.

Une telle fixation de la plaque n'est cependant pas démontable, ce qui ne facilite pas les interventions sur la plaque de chauffe lors des réparations. Le surmoulage de la plaque sur le réservoir est en outre compliqué à mettre en oeuvre.

On a décrit dans la demande de brevet français FR-A-2 708 407 au nom de la Demanderesse une bouilloire ayant une plaque de chauffe reposant, par l'intermédiaire d'un joint, sur un épaulement interne du réservoir, une vis centrale s'étendant entre le fond du réservoir et le centre de la plaque de chauffe afin de maintenir le bord périphérique de cette dernière en contact avec le joint d'étanchéité.

Ce montage présente cependant l'inconvénient d'occuper de la place sous la plaque de chauffe, à un endroit où il est nécessaire de positionner la résistance électrique et les moyens de régulation et de sécurité de la plaque de chauffe.

En outre, le maintien en tension de la plaque sur le joint d'étanchéité par une vis axiale oblige à concevoir une plaque en forme de disque et donc une bouilloire à réservoir de forme cylindrique.

Le document EP-A-0574310 décrit pour sa part une bouilloire dont le fond est solidarisé aux parois latérales du réservoir tout en laissant libre l'espace séparant le fond et la plaque de chauffe.

La plaque de chauffe est ici supportée par un épaulement interne du fond et maintenue en place par une double paroi latérale du fond s'encliquetant sur des épaulements successifs de la paroi extérieure du récipient. Outre la nécessité de moulages complexes pour les deux parties, la solidarisation est tributaire d'un point d'encliquetage entre deux parois.

La présente invention a pour but de résoudre les inconvénients précités en proposant un système de montage perfectionné de la plaque de chauffe dans le corps d'un réservoir de bouilloire.

La bouilloire électrique visée par l'invention comporte un réservoir de liquide à chauffer en matière plastique et un moyen de chauffe incluant au moins une résistance électrique associée à une plaque métallique de chauffe montée à la partie inférieure du réservoir, espacée du fond du réservoir et en contact direct par sa face supérieure avec le liquide à chauffer, les parois latérales du réservoir comportant des moyens formant épaulement adaptés à supporter un rebord périphérique de la plaque métallique de chauffe, un joint d'étanchéité étant disposé entre lesdites parois latérales et le rebord périphérique de la plaque de chauffe.

Selon l'invention, cette bouilloire est caractérisée en ce que le fond du réservoir comprend une jupe s'emboîtant dans les parois latérales du réservoir de manière à enserrer ces dernières au niveau desdits moyens formant épaulement, des moyens de fixation solidarisant la jupe aux parois latérales du réservoir.

La plaque de chauffe est ainsi maintenue en place sur les moyens formant épaulement par un effet de contre-verrouillage obtenu par la jupe enserrant les parois latérales du réservoir. Toute tendance à s'écarter de ces parois est ainsi soigneusement évitée.

Ce montage par l'utilisation d'une jupe extérieure s'encastrant dans les parois latérales du réservoir permet de rendre disponible la totalité de l'espace situé entre le fond du réservoir et la plaque de chauffe.

De plus, ce type de montage n'impose aucune contrainte de formes pour le réservoir.

Selon une version avantageuse de l'invention, la jupe s'étend autour des parois latérales du réservoir, à partir du fond du réservoir et au-delà des moyens formant épaulement.

La jupe est ainsi en contact avec les parois latérales du réservoir au niveau des moyens formant épaulement et a une action de contre-verrouillage directement au droit de la zone de fixation de la plaque de chauffe.

D'autres particularités et avantages de l'invention apparaîtront encore dans la description ci-après.

Aux dessins annexés, donnés à titre d'exemples non limitatifs :
- la figure 1 est une vue partielle en perspective d'un réservoir de bouilloire conforme à un premier mode de réalisation, sans plaque de chauffe;
- la figure 2 est une vue en coupe longitudinale du réservoir de la figure 1, la plaque de chauffe étant montée dans le réservoir;
- la figure 3 est une vue analogue à la figure 2 d'un second mode de réalisation du réservoir; et
- la figure 4 est une vue analogue à la figure 3 d'un second mode de réalisation modifié du réservoir.

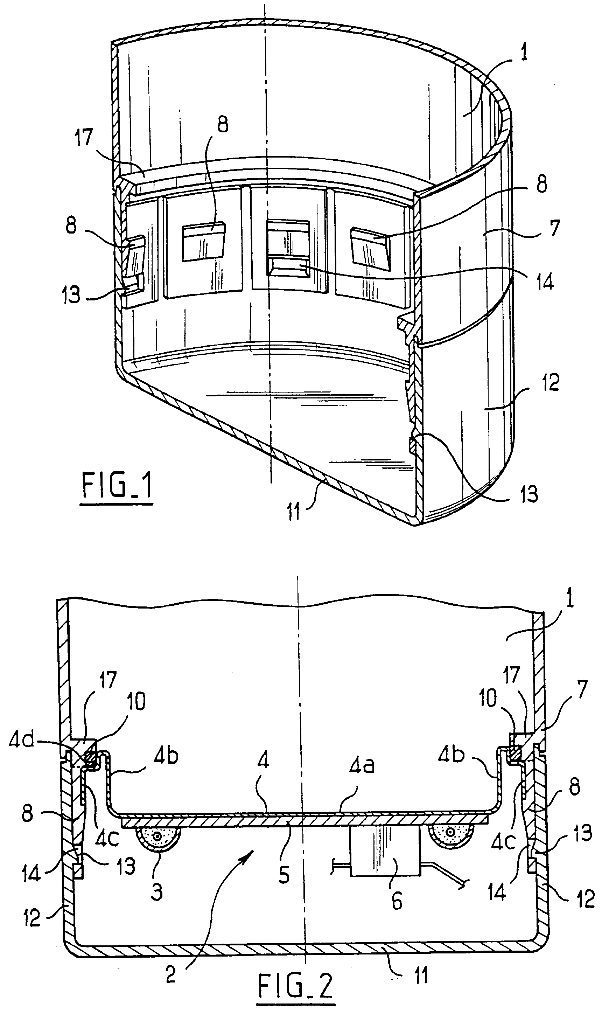

Un premier mode de réalisation va tout d'abord être décrit en référence aux figures 1 et 2.

Une bouilloire électrique comprend un réservoir 1 de liquide à chauffer, en matière plastique, généralement fermé en partie supérieure par un couvercle (non représenté).

Un moyen de chauffe 2 comprend au moins une résistance électrique 3 associée à une plaque métallique de chauffe 4 montée à proximité du fond du réservoir 1.

Une plaque de diffusion thermique 5 et un limiteur thermique 6 sont associés de manière connue à la plaque de chauffe 4. On pourra se reporter pour plus de détails sur le fonctionnement de ce moyen de chauffe à la demande de brevet français FR 93 09 467.

Les parois latérales 7 du réservoir 1 comportent des moyens formant épaulement 8 adaptés à supporter un rebord périphérique 4c, 4d, de la plaque métallique de chauffe 4.

Comme bien illustré à la figure 1, les moyens formant épaulement comprennent une série de butées 8 en saillie sur la face interne des parois latérales 7 du réservoir et réparties uniformément sur le pourtour, dans un plan transversal du réservoir 1 et à proximité du fond du réservoir.

Le rebord périphérique de la plaque 4 comprend une aile 4c s'étendant parallèlement aux parois latérales 7 du réservoir 1 et reposant en son extrémité sur les butées 8.

Cette aile 4c est reliée à la plaque 4 par une seconde aile 4b, s'étendant parallèlement à l'aile 4c, de sorte que la plaque 4 a sensiblement la forme d'un récipient dont le fond est constitué par la surface supérieure 4a et les bords ont une section transversale en forme de U renversé constitué par les deux ailes parallèles 4b, 4c, et une portion de liaison 4d formant la base du U.

Le réservoir 1 a un fond 11 comprenant une jupe 12 adaptée à s'emboîter autour des parois latérales 7 du réservoir 1 pour retenir celles-ci comprimées autour de la plaque de chauffe 4.

La jupe 12 s'étend à partir du fond 11 du réservoir et au-delà des épaulements 8 prévus sur les parois latérales 7.

De préférence, les parois latérales 7 ont un décrochement dans la partie inférieure du réservoir 1, de sorte que la jupe 12 vient s'emboîter autour des parois latérales 7, dans cette partie inférieure du réservoir 1, dans le prolongement de la paroi latérale 7 du reste du réservoir 1.

Des moyens de fixation 13, 14 sont prévus pour solidariser le fond 11 au réservoir 1.

De préférence, ces moyens de fixation sont réversibles, de manière à pouvoir démonter le fond 11 pour accéder et retirer la plaque de chauffe 4 pour réparation.

Dans cet exemple, les moyens de fixation comprennent une série de crochets 13 en saillie disposés sur la jupe 12 du fond 11 et adaptés à être insérés respectivement dans une série d'évidements 14 des parois latérales 7 du réservoir 1.

Ces évidements 14 sont prévus à proximité de l'extrémité inférieure des parois latérales, sous les butées 8 formant épaulement.

Les crochets 13 et les évidements complémentaires 14 sont répartis uniformément dans un plan transversal du réservoir 1.

Le montage de la plaque de chauffe 4 est ainsi très simple à réaliser, par "clipsage" du fond 11 autour des parois latérales 7 du réservoir 1.

Un joint d'étanchéité 10, tel qu'un cordon de silicone polymérisable ou d'une pièce silicone ou autre matière injectée ou découpée, est disposé entre les parois latérales 7 et la portion de liaison 4d du rebord périphérique de la plaque 4.

Les parois latérales 7 comprennent une aile 17 s'étendant vers l'intérieur du réservoir 1, au droit du bord périphérique 4c, 4d de la plaque de chauffe 4, le joint d'étanchéité 10 étant maintenu comprimé entre l'aile 17 et le bord périphérique 4c, 4d, de la plaque 4.

L'aile 17 s'étend parallèlement à la portion de liaison 4d du bord de la plaque de chauffe 4, le joint 10 étant intercalé entre eux.

Dans cet exemple, et afin de maintenir en place le joint d'étanchéité 10, la portion de liaison 4d comprend un épaulement, le joint 10 étant entouré par l'aile 17, la paroi latérale 7 et cet épaulement de la portion de liaison 4d.

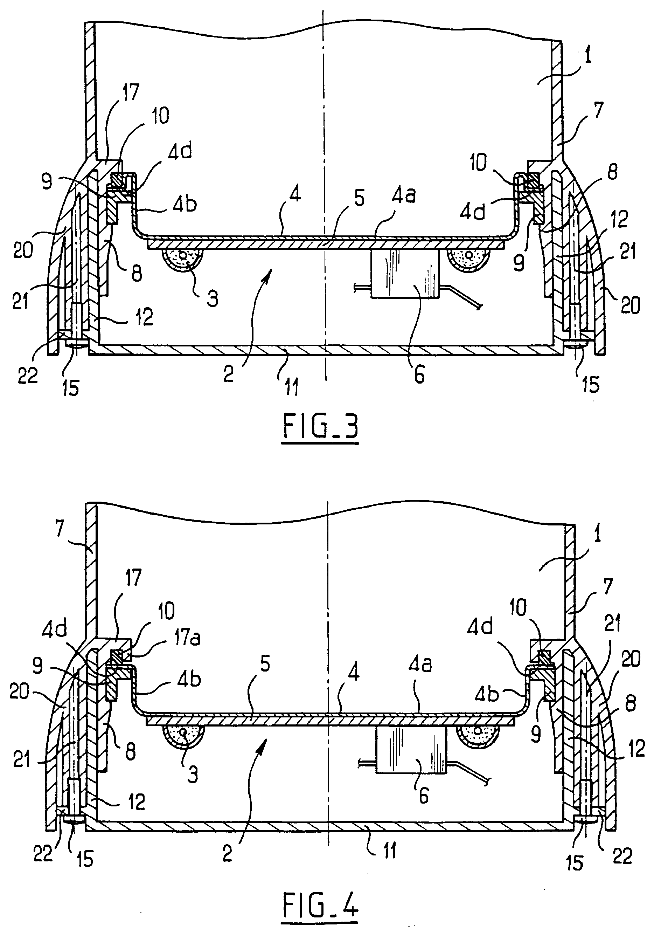

Comme illustré à la figure 4, et à titre de variante, l'aile 17 peut comprendre, à son extrémité, un bord tombé 17a, le joint d'étanchéité 10 étant logé dans une gorge formée par la paroi latérale 7, l'aile 17 et le bord tombé 17a, et débouchant au-dessus de la portion de liaison 4d du bord de la plaque 4.

Cette gorge facilite la mise en place du joint 10 et son maintien en place, même lorsque la plaque de chauffe 4 est démontée.

Dans les réalisations des figures 3 et 4, le montage de la plaque 4 est réalisé selon un second mode de l'invention.

Les moyens formant épaulement comprennent une bague périphérique 9 en matière résistance à haute température supportant le rebord périphérique 4d de la plaque de chauffe 4.

Cette bague périphérique 9 a une section en forme de L renversé dont un bras s'étend parallèlement aux parois latérales 7 du réservoir et repose sur les butées 8 et l'autre bras supporte la portion de liaison 4d du bord de la plaque de chauffe 4.

L'aile 4c du bord de la plaque 4 est ainsi remplacée par la bague périphérique 9, de sorte que la plaque de chauffe 4 n'est plus en contact direct avec le réservoir 1. Ce dernier peut être réalisé en une matière plastique de résistance thermique limitée, tel qu'en polypropylène, et donc à moindre coût.

Seule la bague 9 doit être susceptible de résister à des températures élevées.

Dans ce second mode de réalisation, le réservoir 1 comporte en outre une portion de recouvrement 20 s'étendant sensiblement parallèlement aux parois latérales 7, la jupe 12 du fond 11 étant logée entre les parois latérales 7 et la portion de recouvrement 20 du réservoir 1.

Les moyens de fixation comprennent des vis 15, la portion de recouvrement 20 comportant des alésages taraudés 21 adaptés à recevoir les vis de fixation 15.

Les vis 15 sont ainsi introduites dans une ouverture prévue dans une patte de fixation 22 solidaire du fond 11 et visées dans l'alésage 21 s'étendant parallèlement à la jupe 12 et aux parois latérales 7 du réservoir 1.

La jupe 12 est ainsi emboîtée entre les parois latérales 7 et la portion de recouvrement 20 du réservoir 1, ce qui renforce encore la solidité de la fixation par contre-verrouillage de la plaque 4 dans le réservoir.

Bien entendu, l'invention n'est pas limitée aux exemples décrits ci-dessus et de nombreuses modifications peuvent être apportées à ceux-ci sans sortir du cadre de l'invention.

Ainsi, les différentes caractéristiques relatives aux moyens formant épaulement, à la fixation du joint, aux moyens de fixation... peuvent être combinées indifféremment dans des modes de réalisation différents de ceux illustrés aux figures.

## Revendications

1. Bouilloire électrique comportant un réservoir (1) de liquide à chauffer en matière plastique et un moyen de chauffe (2) incluant au moins une résistance électrique (3) associée à une plaque métallique de chauffe (4) montée à la partie inférieure du réservoir (1), espacée du fond (11) du réservoir et en contact direct par sa face supérieure (4a) avec le liquide à chauffer, les parois latérales (7) du réservoir (1) comportant des moyens formant épaulement (8, 9) adaptés à supporter un rebord périphérique (4c, 4d) de la plaque métallique de chauffe (4), un joint d'étanchéité (10) étant disposé entre lesdites parois latérales (7) et le rebord périphérique (4c, 4d) de la plaque de chauffe (4), caractérisée en ce que le fond (11) du réservoir (1) comprend une jupe (12) s'emboîtant dans les parois latérales (7) du réservoir de manière à enserrer ces dernières au niveau desdits moyens formant épaulement (8, 9), des moyens de fixation (13, 14, 15) solidarisant la jupe (12) aux parois latérales (7, 20) du réservoir (1).

2. Bouilloire conforme à la revendication 1, caractérisée en ce que la jupe (12) s'étend autour des parois latérales (7) du réservoir, à partir du fond (11) du réservoir (1) et au-delà des moyens formant épaulement (8, 9).

3. Bouilloire conforme à l'une des revendications 1 ou 2, caractérisée en ce que les moyens formant épaulement comprennent une bague périphérique (9) en matière résistante à haute température supportant le rebord périphérique (4d) de la plaque de chauffe (4).

4. Bouilloire conforme à l'une des revendications 1 à 3, caractérisée en ce que les parois latérales (7) comprennent une aile (17) s'étendant vers l'intérieur du réservoir (1), au droit du bord périphérique (4c, 4d) de la plaque de chauffe (4), un joint d'étanchéité (10) étant maintenu comprimé entre l'aile (17) et le bord périphérique (4d) de ladite plaque (4).

5. Bouilloire conforme à la revendication 4, caractérisée en ce que l'aile (17) comprend à son extrémité un bord tombé (17a), le joint d'étanchéité (10) étant logé dans une gorge formée par la paroi latérale (7), l'aile (17) et le bord tombé (17a).

6. Bouilloire conforme à l'une des revendications 1 à 5, caractérisée en ce que les moyens de fixation comprennent une série de crochets (13) en saillie disposés sur la jupe (12) dudit fond (11) et adaptés à être insérés respectivement dans une série d'évidements (14) des parois latérales (7) du réservoir (1).

7. Bouilloire conforme à l'une des revendications 1 à 6, caractérisée en ce que le réservoir (1) comporte une portion de recouvrement (20) s'étendant sensiblement parallèlement aux parois latérales (7), la jupe (12) du fond (11) étant logée entre les parois latérales (7) et la portion de recouvrement (20) du réservoir (1).

8. Bouilloire conforme à la revendication 7, caractérisée en ce que les moyens de fixation comprennent des vis (15), la portion de recouvrement (20) comportant des alésages taraudés (21) adaptés à recevoir les vis de fixation (15).

## Claims

1. An electric kettle comprising a reservoir (1) for liquid for heating, said reservoir being made of plastic, and a heating means (2) including at least one electrical resistance (3) associated with a metal heating plate (4) mounted at the bottom part of the reservoir (1), spaced from the bottom (11) of the reservoir, and in direct contact by its upper surface (4a) with the liquid for heating, the side walls (7) of the reservoir (1) comprising means which form a shoulder (8, 9) and which are adapted to support a peripheral rim (4c, 4d) of the metal heating plate (4), a gasket (10) being disposed between said side walls (7) and the peripheral rim (4c, 4d) of the heating plate (4), characterised in that the bottom (11) of the reservoir (1) comprises a skirt (12) nesting in the side walls (7) of the reservoir so as to enclose the latter at the level of said shoulder-forming means (8, 9), fixing means (13, 14, 15) connecting the skirt (12) to the side walls (7, 20) of the reservoir (1).

2. A kettle according to claim 1, characterised in that the skirt (12) extends around the side walls (7) of the reservoir, from the bottom (11) thereof and beyond the shoulder-forming means (8, 9).

3. A kettle according to claim 1 or 2, characterised in that the shoulder-forming means comprise a peripheral ring (9) of material resistant to high temperature, said ring supporting the peripheral rim (4d) of the heating plate (4).

4. A kettle according to any one of claims 1 to 3, characterised in that the side walls (7) comprise a flange (17) extending towards the interior of the reservoir (1), at the peripheral edge (4c, 4d) of the heating plate (4), a gasket (10) being held in compression between the flange (17) and the peripheral edge (4d) of said plate (4).

5. A kettle according to claim 4, characterised in that the flange (17) comprises a flanged edge (17a) at its end, the gasket (10) being housed in a groove formed by the side wall (7), the flange (17) and the flanged edge (17a).

6. A kettle according to any one of claims 1 to 5, characterised in that the fixing means comprise a series of projecting hooks (13) disposed on the skirt (12) of the said bottom (11) and adapted to be inserted respectively in a series of recesses (14) in the side walls (7) of the reservoir (1).

7. A kettle according to any one of claims 1 to 6, characterised in that the reservoir (1) comprises an overlap portion (20) extending substantially parallel to the side wall (7), the skirt (12) of the bottom (11) being housed between the side walls (7) and the overlap portion (20) of the reservoir (1).

8. A kettle according to claim 7, characterised in that the fixing means comprise screws (15), the overlap portion (20) comprising tapped bores (21) adapted to receive the fixing screws (15).

## Patentansprüche

1. Elektrischer Kessel mit einem Reservoir (1) aus Kunststoffmaterial für eine zu erwärmende Flüssigkeit und einem Heizmittel (2) mit wenigstens einem elektrischen Widerstand (3), der mit einer Metall-Heizplatte (4) verbunden ist, welche am unteren Bereich des Reservoirs (1) angebracht ist, in Abstand zum Boden (11) des Reservoirs und durch seine Oberseite (4a) in direktem Kontakt mit der zu erwärmenden Flüssigkeit, wobei die Seitenwände (7) des Reservoirs (1) einen Ansatz bildende Mittel (8, 9) umfassen, die so ausgebildet sind, daß sie eine Umfangsleiste (4c, 4d) der Metall-Heizplatte (4) abstützen, wobei ein Dichtungselement (10) zwischen den Seitenwänden (7) und der Umfangsleiste (4c, 4d) der Heizplatte (4) angeordnet ist, dadurch gekennzeichnet, daß der Boden (11) des Reservoirs (1) einen Mantel (12) umfaßt, der sich in die Seitenwände (7) des Reservoirs einpaßt, derart, daß die letzteren an den einen Ansatz bildenden Mitteln (8, 9) einsetzbar sind, wobei Befestigungsmittel (13, 14, 15) den Mantel (12) mit den Seitenwänden (7, 20) des Reservoirs (1) fest verbinden.

2. Kessel nach Anspruch 1, dadurch gekennzeichnet, daß sich der Mantel (12) ausgehend vom Boden (11) des Reservoirs (1) und über die einen AnSatz bildenden Mittel (8, 9) hinaus um die Seitenwände (7) des Reservoirs herum erstreckt.

3. Kessel nach einem der Ansprüche 1 oder 2, dadurch gekennzeichnet, daß die einen Ansatz bildenden Mittel einen Umfangsring (9) aus einem gegen eine hohe Temperatur widerstandsfähigen Material umfassen, der die Umfangsleiste (4d) der Heizplatte (4) abstützt.

4. Kessel nach einem der Ansprüche 1 bis 3, dadurch gekennzeichnet, daß die Seitenwände (7) einen Flansch (17) umfassen, der sich zum Inneren des Reservoirs (1) hin, senkrecht zur Umfangsleiste (4c, 4d) der Heizplatte (4) erstreckt, wobei ein Dichtungselement (10) zwischen dem Flansch (17) und der Umfangsleiste (4d) der Platte (4) zusammengedrückt gehalten ist.

5. Kessel nach Anspruch 4, dadurch gekennzeichnet, daß der Flansch (17) an seinem Ende einen fallenden Rand (17a) umfaßt, wobei das Dichtungselement (10) in einer Hohlkehle angeordnet ist, die durch die Seitenwand (7), den Flansch (17) und den fallenden Rand (17a) gebildet ist.

6. Kessel nach einem der Ansprüche 1 bis 5, dadurch gekennzeichnet, daß die Befestigungsmittel eine Reihe von vorstehenden Haken (13) umfassen, die an dem Mantel (12) des Bodens (11) angeordnet sind und so ausgebildet sind, daß sie jeweils in eine Reihe von Vertiefungen (14) der Seitenwände (7) des Reservoirs (1) eingesetzt sind.

7. Kessel nach einem der Ansprüche 1 bis 6, dadurch gekennzeichnet, daß das Reservoir (1) einen Abdeckungsbereich (20) umfaßt, der sich im wesentlichen parallel zu den Seitenwänden (7) erstreckt, wobei der Mantel (12) des Bodens (11) zwischen den Seitenwänden (7) und dem Abdeckungsbereich (20) des Reservoirs (1) angeordnet ist.

8. Kessel nach Anspruch 7, dadurch gekennzeichnet, daß die Befestigungsmittel Schrauben (15) umfassen, wobei der Abdeckungsbereich (20) mit Gewinde versehene Bohrungen (21) umfaßt, welche die Befestigungsschrauben (15) aufnehmen können.
